# FASCICULE DE BREVET EUROPEEN

(11) **EP 2 900 988 B1**
(45) Date de publication et mention de la délivrance du brevet: **30.05.2018**
(21) Numéro de dépôt: 13774759.8
(22) Date de dépôt: 19.09.2013
(51) Int. Cl.: F02D 41/00, F02D 41/30

(54) **PROCÉDÉ DE COMMANDE D'UN GROUPE MOTOPROPULSEUR, VÉHICULE, SUPPORT D'ENREGISTREMENT ET PROGRAMME ASSOCIÉS**
VERFAHREN ZUR STEUERUNG EINES ANTRIEBSSTRANGES, FAHRZEUG, ENTSPRECHENDES SPEICHERMEDIUM UND PROGRAMM
METHOD FOR CONTROLLING A POWER TRAIN, VEHICLE, ASSOCIATED RECORDING MEDIUM AND PROGRAM

(30) Priorité: 26.09.2012 FR 1259027
(43) Date de publication de la demande: 05.08.2015
(73) Titulaire: Renault S.A.S., 92100 Boulogne-Billancourt (FR)
(72) Inventeur: THOUVENEL, Nicolas, F-91610 Ballancourt Sur Essonne (FR); ALBIN, Eric, F-92120 Montrouge (FR); CRUCHET, Jerome, F-91650 Breuillet (FR)
(86) Numéro de dépôt international: PCT/FR2013/052161
(87) Numéro de publication internationale: WO 2014/049235

(56) Documents cités:
- WO-A1-03/018974
- US-A- 5 050 452
- US-A1- 2009 157 270

## Description

### Domaine technique de l'invention

L'invention concerne le domaine du véhicule automobile.

L'invention a pour objet plus particulièrement un procédé de gestion d'un groupe motopropulseur.

### État de la technique

Le document WO03/018974 A1 décrit un procédé qui permet de commander la montée de rapport d'une boîte de vitesses à rapports multiples utilisée avec un moteur à combustion interne turbocompressé. De nos jours, les moteurs à allumage commandé et suralimentés sont équipés de vannes de décharge pneumatiques positionnées sur la ligne d'admission d'air, appelées vanne pop-off ou vanne de décharge à l'admission, et de vannes de décharge pneumatiques positionnées sur la ligne d'échappement des gaz, appelées vanne wastegate ou vanne de décharge à l'échappement.

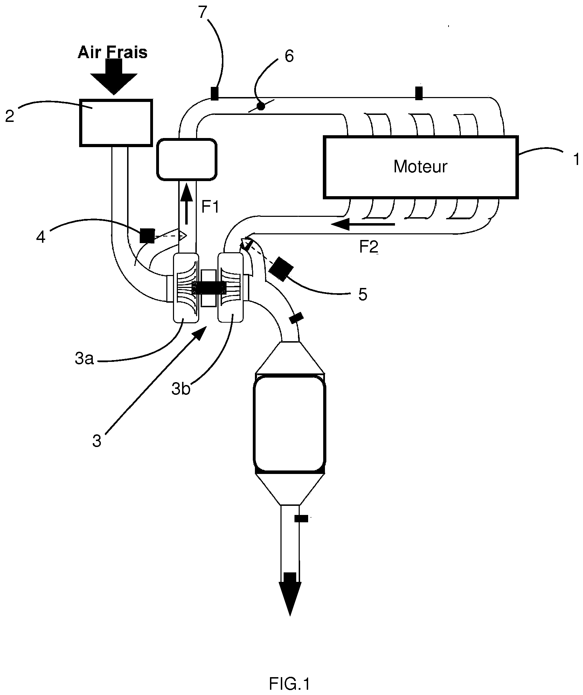

La figure 1 illustre un schéma classique d'un groupe motopropulseur comprenant un moteur thermique 1. Le groupe motopropulseur comporte une arrivée d'air et une sortie de gaz d'échappement. Lors de son arrivée dans le groupe motopropulseur, un air frais traverse successivement un filtre à air 2, un turbocompresseur 3, notamment un compresseur 3a du turbocompresseur 3. L'air d'admission (flèche F1) est considéré comme l'air s'écoulant de la sortie du turbocompresseur 3 jusqu'au moteur 1. Les gaz d'échappement peuvent, en sortie du moteur 1 (flèche F2), traverser le turbocompresseur 3, notamment une turbine 3b du turbocompresseur 3 avant d'être conduits jusqu'à l'échappement du véhicule. Le groupe motopropulseur comporte en outre une vanne pop-off 4 et une vanne wastegate 5.

Le rôle de la vanne pop-off 4 est notamment de décharger l'air d'admission. Pour cela, la vanne pop-off 4 permet de dériver, par recirculation, une partie de l'air d'admission en amont du compresseur 3a de manière à éviter un effet bouchon lors d'une phase de lâcher de pied de l'accélérateur par le conducteur du véhicule. En effet, un tel lâcher de pied peut conduire à une fermeture brutale et rapide d'un boitier papillon 6 du groupe motopropulseur. Cette fermeture brutale du boitier papillon 6 a pour effet de créer un bouchon de pression de suralimentation avec répercussion d'une onde acoustique provoquant un bruit caractéristique sous forme de sifflement pouvant être à l'origine de plaintes de clients.

Le rôle de la vanne wastegate 5 est, lorsque l'on est en état de fonctionnement du véhicule, de réguler la pression de l'air d'admission autour d'une consigne par adaptation de son pourcentage de fermeture. Son rôle est à connotation « fiabilité » et « performance », plutôt que « acoustique » comme la vanne pop-off.

Sur des moteurs, notamment des moteurs à allumage commandé et suralimentés, associés à une boite de vitesse, notamment automatique à double embrayage, lors d'un changement de rapport montant en venant d'un niveau de charge relativement élevé, des oscillations importantes de la mesure de pression de l'air d'admission autour de sa consigne sont observées. Ce phénomène se traduit directement par un léger « à coup » conduisant à un « salut » du conducteur du véhicule au moment de l'enclenchement d'un rapport supérieur de la boîte de vitesse. Lors de la réalisation de ce phénomène, l'avant du véhicule a tendance à s'abaisser légèrement par rapport à l'arrière.

C'est ce phénomène que l'on souhaite limiter le plus possible, voire éliminer.

### Objet de l'invention

Le but de la présente invention est de proposer une solution permettant de limiter le phénomène d'à coup.

Un premier aspect de l'invention concerne un procédé de commande d'un groupe motopropulseur selon la revendication 1. L'étape de modification de l'action des gaz d'échappement peut comporter une étape de dérivation par une deuxième vanne, notamment une vanne wastegate, d'au moins une partie des gaz d'échappement du turbocompresseur, ou une étape de modification de la géométrie d'une turbine du turbocompresseur traversée par les gaz d'échappement.

Il peut être prévu que l'étape de modification de l'action des gaz d'échappement ne soit déclenchée qu'après l'arrêt de l'étape de modification de la pression de l'air d'admission et/ou que l'étape de modification de l'action des gaz d'échappement soit déclenchée concomitamment à l'étape de modification de la pression de l'air d'admission.

L'étape de modification de la pression de l'air d'admission peut n'être enclenchée qu'après une chute prédéterminée du régime du moteur, pouvant correspondre à une valeur de la dérivée du régime moteur passant en dessous d'un seuil minimal correspondant.

L'étape d'ajustement peut éventuellement être stoppée en cas de détection d'une augmentation prédéterminée du régime du moteur, notamment détectée si la dérivée du régime moteur dépasse un seuil maximal correspondant.

Il peut être fait en sorte que l'étape d'ajustement soit stoppée après un laps de temps débutant au moment de la mise en oeuvre de l'étape de modification de la pression de l'air d'admission.

L'étape de modification de l'action des gaz d'échappement peut être fonction d'une évolution de la dérivée du régime moteur et mettre en oeuvre une étape de comparaison de la dérivée du régime moteur avec un seuil de consigne de sorte que l'étape de modification de l'action des gaz d'échappement permette le maintien de la dérivée du régime moteur au-dessus du seuil de consigne.

L'étape de modification de l'action des gaz d'échappement peut être adaptée par une cartographie prédéterminée fonction de la dérivée du régime moteur calibrable.

Une étape de fonctionnement peut être mise en oeuvre dans laquelle l'action des gaz d'échappement en sortie du moteur sur le turbocompresseur est régulée de manière différente que lors de l'étape de modification de l'action des gaz d'échappement associée à l'étape d'ajustement, ladite étape de fonctionnement étant mise en oeuvre consécutivement à l'étape d'ajustement.

L'étape de modification de la pression de l'air d'admission peut être réalisée pendant un temps prédéterminé.

L'étape de modification de la pression de l'air d'admission peut mettre en oeuvre une étape de comparaison de la pression instantanée de l'air d'admission avec un seuil de pression de sorte que l'étape de modification de la pression de l'air d'admission permette le maintien de la pression instantanée en-dessous du seuil de pression.

Un deuxième aspect de l'invention concerne un véhicule automobile comprenant les moyens de mise en oeuvre logiciels et/ou matériels du procédé ci-dessus.

Un troisième aspect de l'invention concerne un support d'enregistrement de données lisible par un calculateur, sur lequel est enregistré un programme informatique comprenant des moyens de codes de programme informatique de mise en oeuvre des étapes d'un procédé ci-dessus.

Enfin, un quatrième aspect de l'invention concerne un programme informatique comprenant un moyen de codes de programme informatique adapté à la réalisation des étapes d'un procédé ci-dessus, lorsque le programme est exécuté par un calculateur.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 représente schématiquement un groupe motopropulseur,
- la figure 2 illustre un mode de réalisation particulier d'un procédé de gestion du groupe motopropulseur selon l'invention,
- la figure 3 illustre plus en détail une étape d'ajustement du procédé de la figure 2,
- la figure 4 représente l'évolution du régime moteur, de la dérivée du régime moteur, de la pression effective de suralimentation de l'air d'admission, et d'une pression de consigne en fonction du temps lorsque le procédé selon l'invention est appliqué,
- la figure 5 représente schématiquement l'évolution de la pression effective de suralimentation et de la pression de consigne en fonction du temps dans le cas où le procédé de gestion n'est pas réalisé.

### Description de modes préférentiels de l'invention

Le procédé décrit ci-après diffère de l'art antérieur notamment en ce que l'on va agir sur certains composants du groupe motopropulseur en les pilotant d'une manière appropriée au moment idoine afin de limiter le phénomène d'à coup.

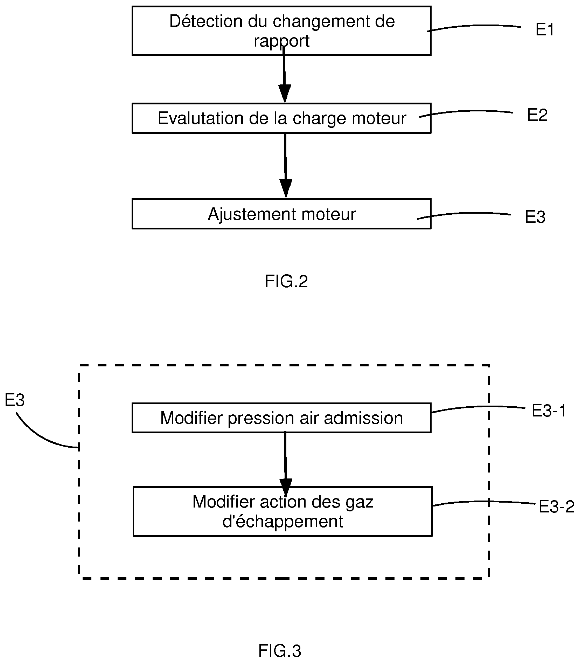

Aux figures 1 et 2, le procédé de commande permet de commander un groupe motopropulseur pour véhicule automobile, ledit groupe motopropulseur étant muni d'un moteur 1, d'un turbocompresseur 3 fournissant à sa sortie de l'air d'admission F1 alimentant le moteur 1 et d'une boîte de vitesse (non représentée) du moteur 1. Un tel procédé comprend une étape de détection E1 d'un changement de rapport de la boîte de vitesse (de préférence un changement de rapport correspondant au passage d'un rapport inférieur vers un rapport supérieur) ; une étape d'évaluation E2 de la charge du moteur au niveau du changement de rapport détecté, et enfin une étape d'ajustement E3 du fonctionnement du moteur réalisée 1 si une condition associée à la charge évaluée est vérifiée.

L'étape de détection E1 du changement de rapport peut être réalisée par la réception, par un module d'exécution du procédé, d'un message en provenance de la boîte de vitesse indiquant qu'un changement de rapport a eu lieu.

De préférence, la boîte de vitesse est une boîte de vitesse automatique notamment à double embrayage sur moteur à allumage commandé et suralimenté. Cette suralimentation est due à l'utilisation du turbocompresseur. Lorsque la boîte de vitesse est une boîte de vitesse automatique, le changement de rapport qui a été détecté est effectué automatiquement par la logique de la boîte de vitesse.

La charge évaluée peut-être celle mesurée juste avant que le changement de rapport soit mis en oeuvre. Ceci permet notamment de connaître la condition d'accélération du véhicule au moment du changement de rapport. A partir d'au moins cette condition, il est possible de déterminer si un phénomène d'à coup risque de se présenter, et de mettre en oeuvre une stratégie pour le limiter. Cette stratégie est dévolue à l'étape d'ajustement E3.

Selon une mise en oeuvre illustrée à la figure 3, l'étape d'ajustement E3 du fonctionnement du moteur 1 est réalisée par une étape de modification de la pression de l'air d'admission E3-1 et par une étape de modification de l'action des gaz d'échappement E3-2 en sortie du moteur 1 sur le turbocompresseur 3.

Ces deux étapes de modification E3-1 et E3-2 sont préférentiellement réalisées à partir de deux actionneurs différents.

L'étape de modification de la pression de l'air d'admission E3-1 a pour fonction d'éviter que la valeur de la pression de l'air d'admission, en aval du turbocompresseur, dépasse par le haut une première consigne. Par « air d'admission », on entend en particulier l'air entre le compresseur 3a du turbocompresseur 3 et le moteur 1, ou plus particulièrement entre le compresseur 3a du turbocompresseur 3 et un boîtier papillon 6 situé en amont du moteur selon l'arrivée de l'air dans ledit moteur 1.

L'étape de modification de l'action des gaz d'échappement E3-2 permet d'éviter que la valeur de la pression de l'air d'admission, en aval du turbocompresseur 3, dépasse par le bas une deuxième consigne. La première consigne est identique à la deuxième consigne : il s'agit de la pression de suralimentation ou la pression avant le boîtier papillon. Elles se différentient par contre au niveau du temps d'action.

Avantageusement, l'étape de modification de la pression de l'air d'admission E3-1 comporte une étape de dérivation d'au moins une partie de l'air d'admission par une première vanne 4. La première vanne 4 peut être une vanne pop-off. De préférence, lorsque cette première vanne 4 s'ouvre, elle permet de re-circuler une partie de l'air d'admission en amont du compresseur 3a du turbocompresseur 3. L'air d'admission ainsi dérivé est alors injecté de nouveau en entrée du compresseur 3a turbocompresseur 3. La première vanne 4 correspond alors à l'un des deux actionneurs évoqués ci-dessus.

Avantageusement, l'étape de modification de l'action des gaz d'échappement E3-2 comporte une étape de dérivation par une deuxième vanne 5 d'au moins une partie des gaz d'échappement du turbocompresseur 3, ou une étape de modification de la géométrie d'une turbine 3b du turbocompresseur 3 traversée par les gaz d'échappement. En fait, l'étape de dérivation par la deuxième vanne 5 permet de court-circuiter au moins en partie la turbine 3b du turbocompresseur 3. La deuxième vanne 5 peut être une vanne wastegate. La deuxième vanne 5 correspond alors à l'autre des deux actionneurs évoqué ci-dessus.

Dans le cas classique, la vanne wastegate peut s'ouvrir à une pression d'air d'admission définie pour éviter au compresseur 3b du turbocompresseur 3 d'imposer une surpression à l'air d'admission, ou de tourner à trop haut régime. Dans le cas présent, l'utilisation de la deuxième vanne 5 permettra de limiter le phénomène que l'on cherche à éviter. La logique pilotant son ouverture sera donc différente.

Les première et deuxième vannes 4, 5 peuvent être de technologie pneumatique ou de technologie électrique. La technologie électrique sera préférée car elle permet d'obtenir des vannes plus rapides à commander, et de diminuer de manière robuste la gêne acoustique potentielle.

De préférence, la condition évoquée ci-dessus quant à la réalisation de l'étape d'ajustement E3 est vérifiée si un couple mesuré du moteur est supérieur à un seuil de couple. Le seuil de couple peut être défini de manière qu'il corresponde à un couple résultant du niveau de pression de suralimentation occasionnant un phénomène d'à-coups. Le seuil de couple est par exemple de l'ordre de 80% du couple maximal.

Selon une première mise en oeuvre de l'étape d'ajustement E3, l'étape de modification de l'action des gaz d'échappement E3-2 n'est déclenchée qu'après l'arrêt de l'étape de modification de la pression de l'air d'admission E3-1.

Selon une deuxième mise en oeuvre de l'étape d'ajustement E3, l'étape de modification de l'action des gaz d'échappement E3-2 est déclenchée concomitamment à l'étape de modification de la pression de l'air d'admission E3-1.

Bien qu'il ait été constaté que les stratégies mises en oeuvre selon la première mise en oeuvre ou la deuxième mise en oeuvre de l'étape d'ajustement amélioraient grandement le confort en limitant l'effet d'à coup, la première mise en oeuvre de l'étape d'ajustement est préférée car elle procure un confort plus important que la deuxième mise en oeuvre lors d'un passage de rapport de la boîte de vitesse.

L'étape de modification de la pression de l'air d'admission peut être réalisée pendant un temps prédéterminé. Dans le cadre de la combinaison de ce temps prédéterminé avec la première mise en oeuvre de l'étape d'ajustement E3, l'étape de modification de l'action des gaz d'échappement E3-2 est déclenchée à la fin du temps prédéterminé. Dans le cadre de la combinaison de ce temps prédéterminé avec la deuxième mise en oeuvre de l'étape d'ajustement E3, l'étape de modification de l'action des gaz d'échappement peut être continuée alors que l'étape de modification de la pression de l'air d'admission s'est arrêtée.

Ce temps prédéterminé est calibré pour éviter de diminuer trop fortement la pression de l'air d'admission en aval du turbocompresseur, ce qui aurait un effet inverse à l'effet souhaité. Ce temps prédéterminé peut, par exemple, avoir été déterminé par étalonnage sur un véhicule étalon pour une pluralité de conditions de roulage et de changement de rapports.

Ci-après différentes stratégies de mise en oeuvre de l'étape d'ajustement vont être décrites.

Avantageusement, l'étape de modification de la pression de l'air d'admission E3-1 n'est enclenchée qu'après une chute prédéterminée du régime du moteur. La chute prédéterminée du régime moteur peut correspondre à une valeur de la dérivée du régime moteur passant en dessous d'un seuil minimal correspondant. Ce seuil minimal permet de traquer le point initial du problème à résoudre. La montée de la pression de suralimentation est liée à la chute de régime. Ainsi, l'utilisation de la dérivée de régime permet d'identifier le point initial.

L'étape d'ajustement E3 peut être stoppée en cours de réalisation si certaines conditions font que le groupe motopropulseur se trouve dans une situation pour laquelle le phénomène d'à coup devient négligeable. Par « stoppée », on entend ici que l'étape de modification de la pression de l'air d'admission et/ou l'étape de modification de l'action des gaz d'échappement peuvent être arrêtées si elles sont en cours de réalisation.

Ainsi, dans un premier cas l'étape d'ajustement peut être stoppée après un laps de temps débutant au moment de la mise en oeuvre de l'étape de modification de la pression de l'air d'admission E3-1. Ce laps de temps peut être surveillé par un compteur temporel de sorte qu'au bout d'un certain temps on considère que le groupe motopropulseur se retrouve dans une situation dans laquelle l'étape d'ajustement n'est plus nécessaire. Par « moment de la mise en oeuvre de l'étape de modification de la pression de l'air d'admission » on entend par exemple l'instant où la chute prédéterminée du régime moteur est réalisée. Ce laps de temps peut être calibré, notamment de façon expérimentale. Il s'agit par exemple de la valeur permettant le meilleur suivi possible de consigne.

Dans un deuxième cas, l'étape d'ajustement E3 est stoppée en cas de détection d'une augmentation prédéterminée du régime du moteur. L'augmentation prédéterminée du régime moteur peut être détectée si la dérivée du régime moteur dépasse un seuil maximal correspondant, qui peut être calibré, notamment de façon expérimentale. Il s'agit par exemple de la valeur permettant le meilleur suivi possible de consigne.

Ce deuxième cas est avantageux car il ne met pas en oeuvre une balance des probabilités sur la nécessité de l'étape d'ajustement en fonction du temps, mais en fonction d'une mesure d'un paramètre physique du moteur de sorte à stopper au meilleur moment l'étape d'ajustement.

Le fait de stopper l'étape d'ajustement au meilleur moment permet de placer le véhicule le plus rapidement possible dans des conditions optimales de roulage selon le couple désiré.

Selon une mise en oeuvre particulière de l'étape de modification de l'action des gaz d'échappement E3-2, cette dernière est fonction d'une évolution de la dérivée du régime moteur. L'étape de modification de l'action des gaz d'échappement E3-2 peut alors mettre en oeuvre une étape de comparaison de la dérivée du régime moteur avec un seuil de consigne de sorte que l'étape de modification de l'action des gaz d'échappement permette le maintien de la dérivée du régime moteur au-dessus du seuil de consigne. Le seuil de consigne peut être obtenu par des essais préalables, en identifiant le seuil de consigne utilisé pour la dérivée de régime après l'étape de modification de la pression d'air d'admission E3-1. Autrement dit, de manière générale, l'étape de modification de l'action des gaz d'échappement E3-2 peut être une étape de régulation de l'action des gaz d'échappement. Pour réaliser le maintien au-dessus du seuil de consigne, une régulation mettant en oeuvre un pilotage particulier de la deuxième vanne 5 peut être mise en oeuvre en entraînant une ouverture plus ou moins grande de la deuxième vanne 5.

L'étape de modification de l'action des gaz d'échappement E3-2 peut aussi être adaptée par une cartographie prédéterminée fonction de la dérivée du régime moteur calibrable. L'Homme du métier utilisera dès lors les paramètres classiques de régulation.

On comprend de ce qui a été dit ci-dessus que le phénomène d'à coup peut être présent à chaque passage de rapport. Ainsi, de préférence, le procédé est itératif, et est mis en oeuvre à chaque passage de rapport de la boîte de vitesse d'un rapport inférieur à un rapport supérieur.

De préférence, si la détection de la chute prédéterminée du régime moteur n'a pas lieu, l'étape d'ajustement est stoppée.

Dans la présente description on a parlé de l'utilisation de la dérivée du régime moteur. Pour la déterminer, il est possible de procéder au calcul de la dérivée temporelle du régime moteur. Cette dérivée peut être la dérivée première ou la dérivée seconde du régime moteur. L'avantage de la dérivée première est la facilité d'utilisation, tandis que l'avantage de la dérivée seconde est une meilleure réactivité et un meilleur suivi.

Hors des passages de vitesse, le véhicule fonctionne de manière optimisée par un contrôle particulier de son fonctionnement, notamment du fonctionnement du turbocompresseur 3. Ainsi, le procédé peut comprendre une étape de fonctionnement dans laquelle l'action des gaz d'échappement en sortie du moteur sur le turbocompresseur 3 est régulée de manière différente que lors de l'étape de modification de l'action des gaz d'échappement associée à l'étape d'ajustement, ladite étape de fonctionnement étant mise en oeuvre consécutivement à l'étape d'ajustement.

En fait, l'étape de fonctionnement correspond à une régulation, par le turbocompresseur, de la pression de l'air d'admission en boucle fermée autour d'une valeur consigne de pression, par exemple mesurée par un capteur de pression 7 disposé entre le compresseur 3a du turbocompresseur 3 et le moteur 1, en actionnant plus ou moins l'ouverture de la deuxième vanne 5. Autrement dit, avant l'étape d'ajustement E3, l'étape de fonctionnement est réalisée, au cours de l'étape d'ajustement E3, l'étape de fonctionnement est interrompue, et consécutivement à l'arrêt de l'étape d'ajustement E3, l'étape de fonctionnement est reprise.

En dehors de l'étape d'ajustement, la vanne wastegate reprend un fonctionnement typique et classique, connu en soi.

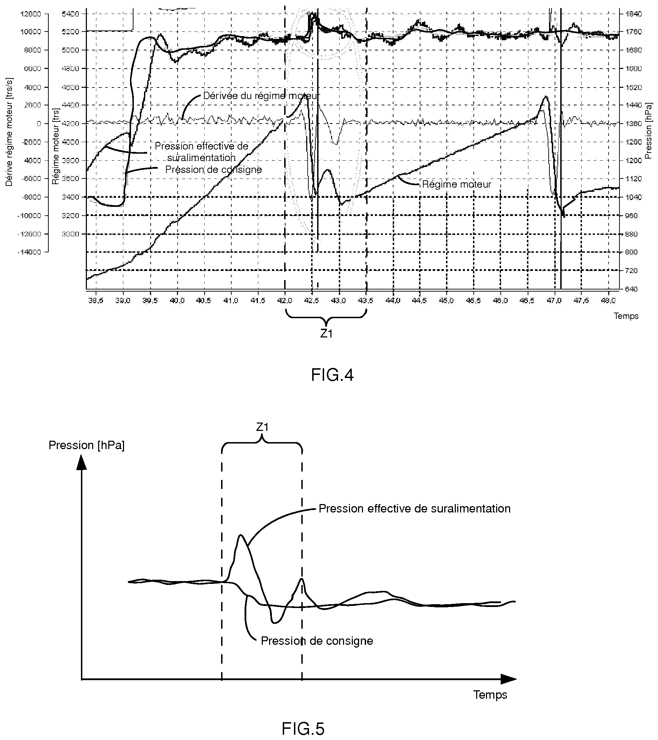

Afin de vérifier le comportement du groupe motopropulseur au cours de la réalisation du procédé, il a été réalisé différents tests dont l'un d'eux est illustré à la figure 4. La figure 4 illustre sur un même schéma l'évolution de différentes composantes à savoir le régime moteur, la dérivée du régime moteur, la pression effective de suralimentation (c'est-à-dire la pression de l'air d'admission en aval du turbocompresseur), et d'une pression de consigne utilisée par exemple dans le pilotage des première et deuxième vannes. La zone Z1 correspond à la zone de changement de rapport, c'est-à-dire un espace temporel au cours duquel les étapes E1, E2, E3 sont réalisées. Dans cette zone Z1, la pression effective de suralimentation reste cohérente avec les consignes du fait de la stratégie mise en oeuvre par le présent procédé. Au contraire, la figure 5 illustre une vue centrée sur Z1 du comportement de la pression effective de suralimentation et de la pression de consigne dans le cadre où le présent procédé n'est pas mis en oeuvre. On voit clairement sur la figure 5 que la pression de consigne est largement dépassée par le haut et par le bas. L'amplitude de la courbe de pression effective est plus importante qu'une amplitude que l'on pourrait constater lors de la mise en oeuvre du présent procédé, c'est cette différence d'amplitude qui permet de limiter le phénomène d'à coup que l'on cherche à éviter. A titre d'exemple, l'application du présent procédé permet d'obtenir des overshoots et des undershoots de l'ordre de +/-50 hPa, lorsqu'ils sont de l'ordre respectivement de +500 et -150 hPa lorsque le présent procédé n'est pas appliqué.

Un véhicule automobile peut comprendre les moyens de mise en oeuvre logiciels et/ou matériels du procédé tel que décrit ci-avant.

Un support d'enregistrement de données lisible par un calculateur, sur lequel est enregistré un programme informatique peut comprendre des moyens de codes de programme informatique de mise en oeuvre des étapes d'un procédé tel que décrit.

Un programme informatique peut comprendre un moyen de codes de programme informatique adapté à la réalisation des étapes d'un procédé tel que décrit, lorsque le programme est exécuté par un calculateur.

## Revendications

1. Procédé de commande d'un groupe motopropulseur pour véhicule automobile, ledit groupe motopropulseur étant muni d'un moteur (1), d'un turbocompresseur (3) fournissant à sa sortie un air d'admission alimentant le moteur (1) et d'une boîte de vitesse du moteur, ledit procédé comprenant les étapes suivantes :
- Détecter (E1) un changement de rapport de la boîte de vitesse,
- Evaluer (E2) la charge du moteur (1) au niveau du changement de rapport détecté,
- Ajuster (E3) le fonctionnement du moteur (1) par une étape de modification de la pression de l'air d'admission (E3-1) comportant une étape de dérivation d'au moins une partie de l'air d'admission par une première vanne (4), notamment une vanne pop-off, et/ou par une étape de modification de l'action des gaz d'échappement en sortie du moteur (1) sur le turbocompresseur (3), l'étape d'ajustement (E3) du fonctionnement du moteur étant réalisée si une condition associée à la charge évaluée est vérifiée, ladite condition étant vérifiée si un couple mesuré du moteur (A) est supérieur à un seuil de couple correspondant à un couple résultant du niveau de pression de suralimentation occasionnant un phénomène d'à-coups,
ledit procédé étant itératif, et mis en oeuvre à chaque passage de rapport de la boîte de vitesse d'un rapport inférieur à un rapport supérieur.

2. Procédé selon la revendication précédente, **caractérisé en ce que** l'étape de modification de l'action des gaz d'échappement (E3-2) comporte une étape de dérivation par une deuxième vanne (5), notamment une vanne wastegate, d'au moins une partie des gaz d'échappement du turbocompresseur (3), ou une étape de modification de la géométrie d'une turbine (3b) du turbocompresseur (3) traversée par les gaz d'échappement.

3. Procédé selon l'une quelconque des revendications précédentes, **caractérisé en ce que** l'étape de modification de l'action des gaz d'échappement (E3-2) n'est déclenchée qu'après l'arrêt de l'étape de modification de la pression de l'air d'admission (E3-1).

4. Procédé selon l'une des revendications 1 à 2, **caractérisé en ce que** l'étape de modification de l'action des gaz d'échappement (E3-2) est déclenchée concomitamment à l'étape de modification de la pression de l'air d'admission (E3-1).

5. Procédé selon l'une quelconque des revendications précédentes, **caractérisé en ce que** l'étape de modification de la pression de l'air d'admission (E3-1) n'est enclenchée qu'après une chute prédéterminée du régime du moteur.

6. Procédé selon la revendication 5, **caractérisé en ce que** la chute prédéterminée du régime moteur correspond à une valeur de la dérivée du régime moteur passant en dessous d'un seuil minimal correspondant.

7. Procédé selon l'une quelconque des revendications précédentes, **caractérisé en ce que** l'étape d'ajustement (E3) est stoppée en cas de détection d'une augmentation prédéterminée du régime du moteur.

8. Procédé selon la revendication précédente, **caractérisé en ce que** l'augmentation prédéterminée du régime moteur est détectée si la dérivée du régime moteur dépasse un seuil maximal correspondant.

9. Procédé selon l'une des revendications 1 à 6, **caractérisé en ce que** l'étape d'ajustement est stoppée après un laps de temps débutant au moment de la mise en oeuvre de l'étape de modification de la pression de l'air d'admission (E3-1).

10. Procédé selon l'une quelconque des revendications précédentes, **caractérisé en ce que** l'étape de modification de l'action des gaz d'échappement (E3-2) est fonction d'une évolution de la dérivée du régime moteur.

11. Procédé selon la revendication 10, **caractérisé en ce que** l'étape de modification de l'action des gaz d'échappement met en oeuvre une étape de comparaison de la dérivée du régime moteur avec un seuil de consigne de sorte que l'étape de modification de l'action des gaz d'échappement (E3-2) permette le maintien de la dérivée du régime moteur au-dessus du seuil de consigne.

12. Procédé selon l'une des revendications 1 à 9, **caractérisé en ce que** l'étape de modification de l'action des gaz d'échappement E3-2 est adaptée par une cartographie prédéterminée fonction de la dérivée du régime moteur calibrable.

13. Procédé selon l'une quelconque des revendications précédentes, **caractérisé en ce qu'**il comprend une étape de fonctionnement dans laquelle l'action des gaz d'échappement en sortie du moteur (1) sur le turbocompresseur (3) est régulée de manière différente que lors de l'étape de modification de l'action des gaz d'échappement (E3-2) associée à l'étape d'ajustement (E3), ladite étape de fonctionnement étant mise en oeuvre consécutivement à l'étape d'ajustement E3.

14. Procédé selon l'une quelconque des revendications précédentes, **caractérisé en ce que** l'étape de modification de la pression de l'air d'admission (E3-1) est réalisée pendant un temps prédéterminé.

15. Procédé selon l'une quelconque des revendications précédentes, **caractérisé en ce que** l'étape de modification de la pression de l'air d'admission (E3-1) met en oeuvre une étape de comparaison de la pression instantanée de l'air d'admission avec un seuil de pression de sorte que l'étape de modification de la pression de l'air d'admission (E3-1) permette le maintien de la pression instantanée en-dessous du seuil de pression.

16. Véhicule automobile comprenant les moyens de mise en oeuvre logiciels et matériels du procédé selon l'une quelconque des revendications précédentes.

17. Support d'enregistrement de données lisible par un calculateur d'un groupe motopropulseur, sur lequel est enregistré un programme informatique comprenant des moyens de codes de programme informatique de mise en oeuvre des étapes d'un procédé selon l'une des revendications 1 à 15.

18. Programme informatique comprenant un moyen de codes de programme informatique adapté à la réalisation des étapes d'un procédé selon l'une des revendications 1 à 15, lorsque le programme est exécuté par un calculateur d'un groupe motopropulseur.

## Patentansprüche

1. Verfahren zur Steuerung eines Antriebsstrangs für ein Kraftfahrzeug, wobei der Antriebsstrang mit einem Motor (1), einem Turbolader (3), der an seinem Ausgang eine Einlassluft liefert, die den Motor (1) speist, und einem Getriebe des Motors ausgestattet ist, wobei das Verfahren die folgenden Schritte umfasst:
- Erkennen (E1) eines Gangwechsels des Getriebes,
- Bestimmen (E2) der Last des Motors (1) bei dem erkannten Gangwechsel,
- Einstellen (E3) des Betriebs des Motors (1) durch einen Schritt der Änderung des Druckes der Einlassluft (E3-1), der einen Schritt der Ableitung wenigstens eines Teils der Einlassluft durch ein erstes Ventil (4), insbesondere ein Ablassventil, beinhaltet, und/oder durch einen Schritt der Änderung der Einwirkung der Abgase am Ausgang des Motors (1) auf den Turbolader (3), wobei der Schritt der Einstellung (E3) des Betriebs des Motors durchgeführt wird, falls eine mit der bestimmten Last zusammenhängende Bedingung erfüllt ist, wobei diese Bedingung erfüllt ist, falls ein gemessenes Drehmoment des Motors (A) größer als ein Drehmomentschwellenwert ist, der einem aus der Höhe des Ladedruckes resultierenden Drehmoment entspricht, welches eine Erscheinung des Ruckelns verursacht,
wobei das Verfahren iterativ ist und bei jedem Gangwechsel des Getriebes von einem niedrigeren Gang zu einem höheren Gang durchgeführt wird.

2. Verfahren nach dem vorhergehenden Anspruch, **dadurch gekennzeichnet, dass** der Schritt der Änderung der Einwirkung der Abgase (E3-2) einen Schritt der Ableitung wenigstens eines Teils der Abgase des Turboladers (3) durch ein zweites Ventil (5), insbesondere ein Ladedruckregelventil, oder einen Schritt der Änderung der Geometrie einer Turbine (3b) des Turboladers (3), die von den Abgasen durchströmt wird, umfasst.

3. Verfahren nach einem der vorhergehenden Ansprüche, **dadurch gekennzeichnet, dass** der Schritt der Änderung der Einwirkung der Abgase (E3-2) erst nach dem Stoppen des Schrittes der Änderung des Druckes der Einlassluft (E3-1) ausgelöst wird.

4. Verfahren nach einem der Ansprüche 1 bis 2, **dadurch gekennzeichnet, dass** der Schritt der Änderung der Einwirkung der Abgase (E3-2) gleichzeitig mit dem Schritt der Änderung des Druckes der Einlassluft (E3-1) ausgelöst wird.

5. Verfahren nach einem der vorhergehenden Ansprüche, **dadurch gekennzeichnet, dass** der Schritt der Änderung des Druckes der Einlassluft (E3-1) nur nach einem vorbestimmten Abfall der Drehzahl des Motors ausgelöst wird.

6. Verfahren nach Anspruch 5, **dadurch gekennzeichnet, dass** der vorbestimmte Abfall der Drehzahl des Motors einem Wert der Ableitung der Motordrehzahl entspricht, der einen entsprechenden minimalen Schwellenwert unterschreitet.

7. Verfahren nach einem der vorhergehenden Ansprüche, **dadurch gekennzeichnet, dass** der Schritt der Einstellung (E3) im Falle der Erkennung einer vorbestimmten Erhöhung der Drehzahl des Motors gestoppt wird.

8. Verfahren nach dem vorhergehenden Anspruch, **dadurch gekennzeichnet, dass** die vorbestimmte Erhöhung der Motordrehzahl erkannt wird, wenn die Ableitung der Motordrehzahl einen entsprechenden maximalen Schwellenwert überschreitet.

9. Verfahren nach einem der Ansprüche 1 bis 6, **dadurch gekennzeichnet, dass** der Schritt der Einstellung nach einem Zeitintervall gestoppt wird, das zum Zeitpunkt der Durchführung des Schrittes der Änderung des Druckes der Einlassluft (E3-1) beginnt.

10. Verfahren nach einem der vorhergehenden Ansprüche, **dadurch gekennzeichnet, dass** der Schritt der Änderung der Einwirkung der Abgase (E3-2) von einem Verlauf der Ableitung der Motordrehzahl abhängig ist.

11. Verfahren nach Anspruch 10, **dadurch gekennzeichnet, dass** im Schritt der Änderung der Einwirkung der Abgase ein Schritt des Vergleichs der Ableitung der Motordrehzahl mit einem Soll-Schwellenwert durchgeführt wird, derart, dass der Schritt der Änderung der Einwirkung der Abgase (E3-2) das Halten der Ableitung der Motordrehzahl über dem Soll-Schwellenwertes ermöglicht.

12. Verfahren nach einem der Ansprüche 1 bis 9, **dadurch gekennzeichnet, dass** der Schritt der Änderung der Einwirkung der Abgase (E3-2) durch ein vorbestimmtes Kennfeld als kalibrierbare Funktion der Ableitung der Motordrehzahl angepasst wird.

13. Verfahren nach einem der vorhergehenden Ansprüche, **dadurch gekennzeichnet, dass** es einen Schritt des Betriebs umfasst, in welchem die Einwirkung der Abgase am Ausgang des Motors (1) auf den Turbolader (3) auf andere Weise geregelt wird als im Schritt der Änderung der Einwirkung der Abgase (E3-2), welcher dem Schritt der Einstellung (E3) zugeordnet ist, wobei dieser Schritt des Betriebs im Anschluss an den Schritt der Einstellung (E3) durchgeführt wird.

14. Verfahren nach einem der vorhergehenden Ansprüche, **dadurch gekennzeichnet, dass** der Schritt der Änderung des Druckes der Einlassluft (E3-1) während einer vorbestimmten Zeit durchgeführt wird.

15. Verfahren nach einem der vorhergehenden Ansprüche, **dadurch gekennzeichnet, dass** im Schritt der Änderung des Druckes der Einlassluft (E3-1) ein Schritt des Vergleichs des momentanen Druckes der Einlassluft mit einem Druckschwellenwert durchgeführt wird, derart, dass der Schritt der Änderung des Druckes der Einlassluft (E3-1) das Halten des momentanen Druckes unter dem Druckschwellenwert ermöglicht.

16. Kraftfahrzeug, welches die Software- und Hardwaremittel zur Durchführung des Verfahrens nach einem der vorhergehenden Ansprüche umfasst.

17. Von einem Rechner eines Antriebsstrangs lesbarer Datenspeicherträger, auf welchem ein Computerprogramm aufgezeichnet ist, das Computerprogrammcodemittel zur Durchführung der Schritte eines Verfahrens nach einem der Ansprüche 1 bis 15 umfasst.

18. Computerprogramm, welches ein Computerprogrammcodemittel umfasst, das für die Durchführung der Schritte eines Verfahrens nach einem der Ansprüche 1 bis 15, wenn das Programm von einem Rechner eines Antriebsstrangs ausgeführt wird, ausgelegt ist.

## Claims

1. Method for controlling a power train for a motor vehicle, the said power train being equipped with an engine (1), with a turbocharger (3) supplying at outlet an intake air fed to the engine (1), and with an engine gearbox, the said method comprising the following steps:
- detecting (E1) a change in gearbox ratio,
- evaluating (E2) the load on the engine (1) at the detected gear change,
- adjusting (E3) the operation of the engine (1) through a step of modifying the intake-air pressure (E3-1) involving a step of diverting at least some of the intake air through a first valve (4), notably a pop-off valve and/or through a step of modifying the action of the exhaust gases leaving the engine (1) on the turbocharger (3), the step (E3) of adjusting the operation of the engine being performed if a condition associated with the evaluated load is satisfied, the said condition being satisfied if a measured engine torque (A) is above a torque threshold corresponding to a torque resulting from a level of boost pressure that causes a compressor surge phenomenon,
the said method being iterative and performed on each gearbox gear change from a lower ratio to a higher ratio.

2. Method according to the preceding claim, **characterized in that** the step of modifying the action of the exhaust gases (E3-2) involves a step of diverting through a second valve (5), notably a wastegate valve, at least some of the exhaust gases from the turbocharger (3) or a step of modifying the geometry of a turbine (3b) of the turbocharger (3) through which the exhaust gases pass.

3. Method according to either one of the preceding claims, **characterized in that** the step of modifying the action of the exhaust gases (E3-2) is not triggered until after the step of modifying the intake-air pressure (E3-1) has ceased.

4. Method according to one of Claims 1 and 2, **characterized in that** the step of modifying the action of the exhaust gases (E3-2) is triggered to run at the same time as the step of modifying the intake-air pressure (E3-1).

5. Method according to any one of the preceding claims, **characterized in that** the step of modifying the intake-air pressure (E3-1) is not triggered until the engine speed has fallen by a predetermined amount.

6. Method according to Claim 5, **characterized in that** the predetermined fall in engine speed corresponds to a value of the derivative of engine speed dropping below a corresponding minimum threshold.

7. Method according to any one of the preceding claims, **characterized in that** the adjustment step (E3) is stopped if a predetermined increase in engine speed is detected.

8. Method according to the preceding claim, **characterized in that** the predetermined increase in engine speed is detected if the derivative of engine speed exceeds a corresponding maximum threshold.

9. Method according to one of Claims 1 to 6, **characterized in that** the adjustment step is stopped after a time lapse beginning at the moment of implementation of the step of modifying the intake-air pressure (E3-1).

10. Method according to any one of the preceding claims, **characterized in that** the step of modifying the action of the exhaust gases (E3-2) is a function of a change in the derivative of engine speed.

11. Method according to Claim 10, **characterized in that** the step of modifying the action of the exhaust gases implements a step of comparing the derivative of engine speed against a reference threshold so that the step of modifying the action of the exhaust gases (E3-2) allows the derivative of engine speed to be kept above the reference threshold.

12. Method according to one of Claims 1 to 9, **characterized in that** the step of modifying the action of the exhaust gases E3-2 is adapted using a calibratable engine speed derivative governed predetermined map.

13. Method according to any one of the preceding claims, **characterized in that** it comprises a step of operation in which the action of the exhaust gases leaving the engine (1) on the turbocharger (3) is regulated differently than during the step of modifying the action of the exhaust gases (E3-2) associated with the adjustment step (E3), said operation step being implemented consecutively after the adjustment step E3.

14. Method according to any one of the preceding claims, **characterized in that** the step of modifying the intake-air pressure (E3-1) is performed for a predetermined length of time.

15. Method according to any one of the preceding claims, **characterized in that** the step of modifying the intake-air pressure (E3-1) implements a step of comparing the instantaneous intake-air pressure against a pressure threshold so that the step of modifying the intake-air pressure (E3-1) allows the instantaneous pressure to be kept below the pressure threshold.

16. Motor vehicle comprising hardware and software means of implementing the method according to any one of the preceding claims.

17. Data recording medium readable by a computer of a power train, on which medium is recorded a computer program comprising computer program code means for implementing the steps of a method according to one of Claims 1 to 15.

18. Computer program comprising a computer program code means suitable for carrying out the steps of a method according to one of Claims 1 to 15 when the program is executed by a computer of a power train.
